# EUROPÄISCHE PATENTANMELDUNG

(11) **EP 0 651 213 A1**
(43) Veröffentlichungstag der Anmeldung: **03.05.1995**
(21) Anmeldenummer: 94114059.2
(22) Anmeldetag: 08.09.1994
(51) Int. Cl.: F25B 41/06, G05D 23/32, G05D 23/19

(54) **Temperaturregelungsvorrichtung**

(30) Priorität: 28.10.1993 DE 4336914
(71) Anmelder: Baldwin-Gegenheimer GmbH, D-86165 Augsburg (DE)
(72) Erfinder: Lagger, Jürgen, D-86169 Augsburg (DE)
(74) Vertreter: Vetter, Ewald Otto, Dipl.-Ing.

(57) **Zusammenfassung**

Temperaturregelungsvorrichtung mit einem Kältemittelkreislauf (2). In Abhängigkeit von der Temperatur eines zu kühlenden Mediums (50) und in Abhängigkeit von der Temperatur des Kältemittels im Kältemittelkreislauf (2) wird die variable Durchfluß-Querschnittsgröße eines Expansionsventils (16) in der Weise geregelt, daß einem Verdampfer (18) nur soviel flüssiges Kältemittel zugeführt wird, daß mit Sicherheit das gesamte Kältemittel im Verdampfer (18) verdampft wird. Die Abhängigkeit von der Temperatur des zu kühlenden Mediums (50) besteht darin, daß in Abhängigkeit von der Mediums-Temperatur ein Temperatursensor (42) gekühlt wird, welcher die Temperatur des Kältemittels am Ausgang (36) des Verdampfers (18) mißt. Dadurch wird das Meßergebnis des Kältemittel-Temperaturfühlers (42) verfälscht und das Expansionsventil (16) in Abhängigkeit von einem Kältemittel-Temperaturwert geregelt, welcher unter dem tatsächlichen Wert der Kältemitteltemperatur liegt.

## Beschreibung

Die Erfindung betrifft eine Temperaturregelungsvorrichtung gemäß dem Oberbegriff von Anspruch 1.

Es gibt bereits eine Temperaturregelungsvorrichtung mit einem Kältemittelkreislauf, welcher einen Verdichter, einen Verflüssiger, einen Verdampfer, ein Ventil mit variabler Kältemitteldurchfluß-Querschnittsgröße im Strömungsweg des Kältemittels vom Verdichter zum Verdampfer zur Steuerung der Kältemittel-Strömungsmenge pro Zeiteinheit, im folgenden Kältemittel-Strömungsrate genannt, aufweist. Ein Temperatursensor erzeugt in Abhängigkeit von der Temperatur, welche das Kältemittel im Kältemittelströmungsweg zwischen dem Verdampfer und dem Verdichter hat, ein Steuersignal zur Betätigung des Ventils. Mit abnehmender Kältemitteltemperatur wird die Kältemitteldurchfluß-Querschnittsgröße des Ventils verkleinert und dadurch dem Verdampfer weniger Kältemittel zugeführt. Umgekehrt wird bei einer Zunahme der Kältemitteltemperatur, welche vom Temperatursensor ermittelt wird, die Kältemittelströmungs-Querschnittsgröße des Ventils entsprechend vergrößert und dadurch dem Verdampfer mehr Kältemittel zugeführt. Auf diese Weise wird die Temperatur des Kältemittels im Kältemittelströmungsweg zwischen dem Verdampfer und dem Verdichter innerhalb bestimmter Temperaturgrenzen, beispielsweise zwischen 8 °C und 10 °C, aufrechterhalten. Je kleiner die pro Zeiteinheit benötigte Kältemittelmenge ist, desto geringer ist die erforderliche Leistung des Verdichters. Der Verdichter wird in Abhängigkeit von der Temperatur des zu kühlenden Mediums bei einer unteren Temperaturgrenze abgeschaltet und bei einer oberen Temperaturgrenze eingeschaltet. Je enger der gewünschte Temperaturbereich ist, desto häufiger muß der Verdichter eingeschaltet und ausgeschaltet werden. Das Ventil wird in Abhängigkeit vom Druck des Kältemittels in der Weise gesteuert, daß es beim Abschalten des Verdichters durch den dann abfallenden Druck des Kältemittels ebenfalls abgeschaltet und damit geschlossen wird. Der Verdampfer dient zur Kühlung eines zu kühlenden Mediums. Das zu kühlende Medium kann beispielsweise Feuchtwasser oder Kühlwasser einer Druckmaschine, z.B. einer Offsetdruckmaschine, sein. Das zu kühlende Medium erwärmt im Verdampfer das Kältemittel, wobei gleichzeitig das Medium vom Kältemittel abgekühlt wird. Das flüssige Kältemittel kann nur bis auf seine Verdampfungstemperatur erwärmt werden, welche beispielsweise 4 °C betragen kann, da eine weitere Wärmezufuhr lediglich die Verdampfung des flüssigen Kältemittels zur Folge hat. Dabei kann sich die Temperatur des verdampften gasförmigen Kältemittels über die Verdampfungstemperatur erhöhen. Durch Steuerung des Ventils muß sichergestellt werden, daß im Verdampfer das gesamte Kältemittel von der flüssigen Phase in die gasförmige Phase umgewandelt wird und kein flüssiges Kältemittel in den Verdichter gelangt. Dabei erfolgt die Regelung des Ventils in der Weise, daß das gasförmige Kältemittel am Auslaß des Verdampfers auf einer Temperatur gehalten wird, welche um mehrere Grad, beispielsweise um 6 C° höher ist als die Verdampfungstemperatur. Dadurch ergibt sich für die Temperatur des gasförmigen Kältemittels zwischen dem Verdampfer und dem Verdichter beispielsweise ein Wert von 10 °C. Der Temperaturunterschied zwischen der Verdampfungstemperatur und dieser Temperatur am Auslaß des Verdampfers wird "Überhitzung" oder "Überhitzungstemperatur" genannt. Das Ventil ist ein sogenanntes "thermostatisches Expansionsventil". Es enthält eine Membran zur Einstellung einer Durchfluß-Querschnittsgröße in Abhängigkeit vom Druck eines auf die Membran wirkenden "Expansionssignals". Das "Expanisonssignal" wird durch ein gasförmiges oder flüssiges Medium in einer Kapillarleitung gebildet, welche mit ihrem einen Ende an das Ventil und mit ihrem anderen Ende an einen Temperatursensor angeschlossen ist. Das gasförmige oder flüssige Medium drückt in Abhängigkeit von der vom Temperatursensor gemessenen Temperatur mehr oder weniger stark auf die Membran. In besonderer Ausführungsform kann die Kapillarleitung oder ein Teil von ihr selbst den Temperatursensor bilden.

Das häufige Einschalten und Ausschalten des Verdichters reduziert seine Lebensdauer wesentlich. Zur Reduzierung der Schalthäufigkeit des Verdichters ist eine Temperaturregelungsvorrichtung mit einem Kältemittelkreislauf bekannt, bei welcher in Abhängigkeit von der Temperatur des Kältemittels am Verdampferauslaß, gemessen durch einen Temperatursensor, und in Abhängigkeit von der Kältemitteltemperatur am Verdampfereinlaß, gemessen durch einen die Verdampfungstemperatur messenden Temperatursensor, sowie als dritte Größe in Abhängigkeit von der Temperatur des zu kühlenden Mediums, gemessen durch einen dritten Temperatursensor, das Ventil mittels eines elektro-mechanischen Stellantriebes gesteuert wird. Die zur Ermittlung der Temperatur des Kältemittels am Verdampfereinlaß und am Verdampferauslaß sowie zur Ermittlung der Temperatur des zu kühlenden Mediums erforderlichen drei Temperatursensoren benötigen für eine koordinierte Steuerung des Ventils eine aufwendige Elektronik.

Durch die Erfindung soll die Aufgabe gelöst werden, die Temperaturregelungsvorrichtung derart auszubilden, daß weniger Temperatursensoren, eine einfachere elektronische Steuereinrichtung und kein elektro-mechanischer Stellantrieb benötigt werden. Ferner soll die Vereinfachung derart sein, daß auch bestehende Temperaturregelungsvorrichtungen, welche ein thermostatisches Expansionsventil enthalten, auch noch nachträglich gemäß der Erfindung ausgebildet werden können (retrofit), ohne daß der Kältemittelkreislauf geöffnet werden muß. Die Temperaturregelungsvorrichtung soll derart ausgebildet sein, daß der Verdichter nur selten eingeschaltet und ausgeschaltet werden muß. In besonderer Anwendung der Temperaturregelungsvorrichtung soll sie zur Kühlung von Flüssigkeiten verwendet werden, die in Druckmaschinen verwendet werden, wie beispielsweise Feuchtwasser, Kühlwasser, Waschflüssigkeit, Farben, Öle usw.

Diese Aufgabe wird gemäß der Erfindung durch die kennzeichnenden Merkmale von Anspruch 1 gelöst.

Die Vorteile der Temperaturregelungsvorrichtung nach der Erfindung sind insbesondere eine einfache elektronische Steuereinrichtung; das Erfordernis von nur zwei Temperatursensoren; die Verwendung eines einfachen Expansionsventils mit einer Membran zur Einstellung der Kältemitteldurchfluß-Querschnittsgröße des Ventils mittels des Druckes einer Flüssigkeit oder eines Gases in einem Kapillarrohr in Abhängigkeit von der Temperatur des Kältemittels am Ausgang des Verdampfers. Dadurch können bestehende Kältemittelkreisläufe, welche ein Expansionsventil enthalten, gemäß der Erfindung ausgebildet werden, ohne daß der Kältemittelkreislauf geöffnet werden muß.

Weitere Merkmale der Erfindung sind in den Unteransprüchen enthalten.

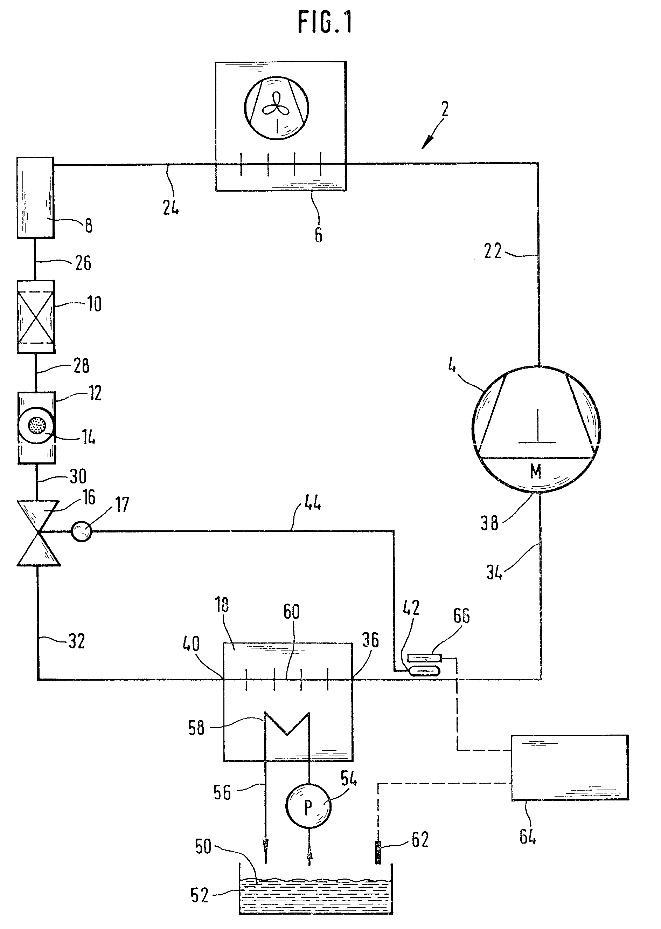

Die Erfindung wird im folgenden mit Bezug auf die Zeichnung anhand einer bevorzugten Ausführungsform als Beispiel beschrieben. In der Zeichnung zeigt
- Fig. 1: eine Temperaturregelungsvorrichtung nach der Erfindung mit einem Kältemittelkreislauf.

Die in Fig. 1 dargestellte Temperaturregelungsvorrichtung nach der Erfindung enthält einen Kältemittelkreislauf 2. Der Kältemittelkreislauf 2 enthält in Strömungsrichtung seines Kältemittels nacheinander folgende Elemente: Einen hermetisch geschlossenen Verdichter 4, einen vorzugsweise mit Luft gekühlten Verflüssiger 6, einen Flüssigkeitssammler 8, einen Filter-Trockner 10 zum Herausfiltern von Wasseranteilen und von Feststoffteilchen aus dem Kältemittel, einen Feuchtigkeitsindikator 12 mit einem Schauglas 14, ein Expansionsventil 16, einen Verdampfer 18, und diese Elemente in der genannten Reihenfolge zu einem Kreislauf verbindende Rohrleitungen 22, 24, 26, 28, 30, 32 und 34, wobei die letztgenannte Rohrleitung 34 einen Kältemittelauslaß 36 des Verdampfers 18 mit einem Kältemitteleinlaß 38 des Verdichters 4 verbindet. Die Rohrleitung 32, welche das Ventil 16 mit einem Kältemitteleinlaß 40 des Verdampfers 18 verbindet, ist vorzugsweise sehr kurz oder durch einen Anschlußstutzen gebildet, so daß das Ventil 16 unmittelbar am Kältemitteleinlaß 40 des Verdampfers 18 angeordnet ist.

Das Ventil 16 ist ein sogenanntes thermostatisches Expansionsventil, welches als Ventilkörper oder zur Betätigung seines Ventilkörpers eine Membran 17 enthält, die vom Druck einer Flüssigkeit oder eines Gases betätigt wird, welches sich in einer Kapillarleitung 44 befindet. Der Druck der Flüssigkeit oder des Gases wird von einem Temperatursensor 42 temperaturabhängig verändert. Die Rohrleitung 34, welche den Verdampfer 18 mit dem Verdichter 4 verbindet, ist mit dem Temperatursensor 42 zur Messung der Temperatur des Kältemittels in dieser Rohrleitung 34 versehen. Der Temperatursensor 42 ist von der Art, welche ein temperaturabhängig expandierendes Element enthält, durch welches der Druck der Flüssigkeit oder des Gases in einer Kapillarleitung 44 variiert werden kann. Die Kapillarleitung 44 verbindet den Temperatursensor 42 mit dem Ventil 16 und das in der Kapillarleitung 44 enthaltene Druckmittel in Form von Flüssigkeit oder Gas verändert über die Membran 17 die Kältemitteldurchfluß-Querschnittsgröße des Ventils 16 in Abhängigkeit von der vom Temperatursensor 42 gemessenen Temperatur des Kältemittels in der Rohrleitung 34. Dabei wird die Kältemitteldurchfluß-Querschnittsgröße des Ventils 16 mit zunehmender Temperatur des Kältemittels in der Rohrleitung 34 vergrößert und, umgekehrt, mit abnehmender Temperatur verkleinert. Die Kapillarleitung 44 oder ein Teil von ihr kann selbst den Temperatursensor 42 bilden. In diesem Falle ist das in der Kapillarleitung enthaltene Gas oder die in ihr enthaltene Flüssigkeit ein Medium, welches in Abhängigkeit von der Temperatur, welche das Kältemedium in der Rohrleiutng 34 stromabwärts des Verdampfers 18 hat, mehr oder weniger weit expandiert oder komprimiert wird.

Im Verdampfer 18 findet ein Wärmeaustausch zwischen dem Kältemittel und einem zu kühlenden Medium 50 statt. Das zu kühlende Medium 50 ist vorzugsweise eine in Druckmaschinen verwendete Flüssigkeit, wie beispielsweise Feuchtwasser, Waschwasser, Farbe usw. Die Temperaturregelungsvorrichtung kann jedoch auch für andere Zwecke verwendet werden. Bei der dargestellten Ausführungsform befindet sich das zu kühlende Medium 50 in einem Behälter 52 und es wird von einer Pumpe 54 aus dem Behälter 52 heraus durch den Verdampfer 18 und wieder zurück in den Behälter 52 innerhalb einer Rohrleitung 56 gefördert. Diese Rohrleitung 56 enthält im Verdampfer 18 einen Wärmetauscher-Leitungsabschnitt 58, welcher mit einem Kältemittel-Leitungsabschnitt 60 im Verdampfer 18 Wärme austauscht.

Die Temperatur des Mediums 50 wird durch einen Temperatursensor 62 ermittelt, welcher in Abhängigkeit von der Temperatur des Mediums elektrische Signale an eine elektronische Steuer- oder Regeleinrichtung 64 sendet. Die elektronische Steuer- oder Regeleinrichtung 64 stellt in Abhängigkeit von den Temperatursignalen des Medium-Temperatursensors 62 die Kälteleistung eines Kühlelements 66 ein, welches nahe bei oder direkt an dem Kältemittel-Temperatursensor 42 angeordnet ist und ihn in Abhängigkeit von der Mediums-Temperatur kühlt. Das Kühlelement 66 ist vorzugsweise ein Peltier-Element. Durch die Kühlung des Kältemittel-Temperatursensors 42 erzeugt er in der Kapillarleitung 44 für das Ventil 16 ein Druck- Steuersignal, welches einem Temperaturwert entspricht, der um die Kühlung, welche vom Kühlelement 66 verursacht wird, niedriger ist als die tatsächliche Temperatur des Kältemittels am Auslaß 36 des Verdampfers 18. Die elektronische Steuer- oder Regeleinrichtung 64 stellt die Kälteleistung des Kühlelements 66 in der Weise ein, daß die Kälteleistung des Kühlelements 66 mit zunehmend größer werdender, vom Mediums-Temperatursensor 62 gemessener Mediums-Temperatur kleiner wird und, umgekehrt, mit kleiner werdender Mediums-Temperatur größer wird.

### Funktion:

Das Ventil 16 wirkt als Drosselventil und hat die Aufgabe, dem Verdampfer 18 nur die Menge flüssigen Kältemittels zuzuführen, die im Verdampfer 18 aufgrund der Wärmezufuhr durch das Medium 50 vollständig verdampfen kann. Das Ventil 16 regelt mit Hilfe des am Verdampferauslaß 36 auf der Rohrleitung 34, welche vorzugsweise aus Kupfer besteht, angebrachten Temperatursensors 42 eine dem Ventil 16 und dem Verdampfer 18 konstruktiv vorgegebene Überhitzung des vom Verdichter 4 angesaugten gasförmigen Kältemittels. Unter "Überhitzung" versteht man die Erwärmung des verdampften Kältemittels über die Verdampfungstemperatur, die erst nach vollständiger Verdampfung des Kältemittels erfolgen kann. Da die Verdampfung im Verdampfer 18 stattfindet ist sichergestellt, daß der Verdichter 4 kein Kältemittel in flüssiger Form ansaugt, welches zu mechanischen Schäden am Verdichter 4 führen kann. Der Verdichter 4 ist vorzugsweise ein hermetisch verschlossener Hubkolben-Verdichter, mit einer Ventilplatte, welche empfindlich gegen flüssiges Kältemittel ist. Mit thermoelektrischen Modulen wie beispielsweise einem Peltier-Element als Kühlelement 66 läßt sich durch Anlegen einer elektrischen Gleichspannung Wärme oder Kälte erzeugen. Diese thermoelektrischen Module, welche auf Halbleiterbasis hergestellt sein können, haben sehr kleine Abmessungen und sind einfach zu regeln.

Um eine möglichst konstante Temperatur des Mediums 50 auch bei schwankender Wärmelast am Verdampfer 18 zu erhalten, ist eine Regelung der Kühlleistung des Kältemittelkreislaufes nötig. Das Ventil 16 allein wird immer versuchen, den Verdichter 4 vor flüssigem Kältemittel zu schützen und die maximale Kälteleistung im Kältemittelkreislauf zu erzeugen. Die Regelung der Temperatur des Mediums 50 erfolgt bei der dargestellten bevorzugten Ausführungsform der Erfindung mit Hilfe eines handelsüblichen thermostatischen Expansionsventils 16, dessen Temperatursensor 42 durch ein Peltier-Element 66 gekühlt und dadurch beeinflußt wird. Wenn durch das Peltier-Element 66 ein elektrischer Gleichstrom fließt, so kühlt sich die eine Seite des Peltier-Elements 66 ab und diese Seite nimmt vom Kältemittel-Temperatursensor 42 Wärmeenergie weg. Die von der kalten Elementseite des Peltier-Elements 66 aufgenommene Wärmeenergie wird an der davon abgewandten Elementseite über einen Kühlkörper abgegeben. Durch diese Kühlung des Kältemittel-Temperatursensors 42 sinkt der Innendruck im Kältemittel-Temperatursensor 42, welcher als Thermostat-Expansionselement ausgebildet ist, ab, wodurch das Ventil 16 durch Verringerung der Kältemittelzufuhrmenge pro Zeiteinheit zu dem Verdampfer 18 die scheinbar zu geringe Überhitzung ausregelt, also weniger Kältemittel durchläßt. Auf diese Weise wird die konstruktiv vorgegebene Überhitzung um den Wert erhöht, den das Peltier-Element 66 dem Kältemittel-Temperatursensor 42 des Ventils 16 an Wärmeenergie entzieht. Durch die Reduzierung der Kältemittel-Zufuhrmenge zum Verdampfer 18 steigt die tatsächliche Überhitzung, verringert sich der Verdampfungsdruck und verringert sich der Kältemittelmassenstrom, was zu einer Reduzierung der Leistung des Verdampfers 18 und der Leistung des Verdichters 4 führt.

Die elektronische Steuer- oder Regeleinrichtung 64 regelt den elektrischen Strom durch das Peltier-Element 66 und dadurch seine Kühlleistung in Abhängigkeit von der Temperatur des Mediums 50, welche durch den Mediums-Temperatursensor 66 gemessen wird. Dadurch wird die Leistung des Verdampfers 18 und die Leistung des Verdichters 4 über das Ventil 16 an die sich ändernde Wärmezufuhr durch das Medium 50 im Verdampfer 18 angepaßt.

Der Verdichter 4 wird in Abhängigkeit von der vom Temperatursensor 62 gemessenen Temperatur des Mediums 50 eingeschaltet, wenn sie über einen oberen Grenzwert ansteigt, und abgeschaltet, wenn sie unter einen unteren Grenzwert abfällt.

Durch die konstruktiv bedingte begrenzte Schalthäufigkeit von Verdichtern 4, welche nicht größer als 6 Schaltungen pro Stunde sein soll, ist mit einer reinen Thermostatregelung, welche kein Kühlelement 66 aufweist, die geforderte Temperaturgenauigkeit nicht zu erreichen. Durch die Erfindung ist es außerdem möglich, bereits bestehende Anlagen mit der vorstehend beschriebenen Temperaturregelungsvorrichtung nachträglich auszurüsten, ohne daß der Kältemittelkreislauf 2 geöffnet werden muß. Anstelle der bei Ventilen mit Stellantrieb erforderlichen komplizierten elektronischen Steuereinrichtung wird die wesentlich einfachere elektronische Steuer- oder Regeleinrichtung 64 verwendet.

## Patentansprüche

1. Temperaturregelungsvorrichtung mit einem Kältemittelkreislauf (2), welcher in Kältemittel-Strömungsrichtung einen Verdichter (4), einen Verflüssiger (6), ein Expansionsventil (16) mit variabler Durchfluß-Querschnittsgröße zur Steuerung der Kältemittel-Durchflußrate und einen Verdampfer (18) aufweist, mit einem ersten Temperatursensor (42), welcher die Temperatur des Kältemittels auf seinem Weg vom Verdampfer (18) zum Verdichter (4) mißt und in Abhängigkeit von der gemessenen Temperatur ein pneumatisches oder hydraulisches Expansionssignal (bei 44) erzeugt, welches die Durchfluß-Querschnittsgröße des Expansionsventils (16) steuert, wobei das Expansionsventil (16) mit steigender Temperatur des Kältemittels zur Erhöhung der Kältemittel-Durchflußrate weiter geöffnet und, umgekehrt, mit fallender Temperatur des Kältemittels zur Reduzierung der Kältemittel-Durchflußrate weiter geschlossen wird,
**dadurch gekennzeichnet**, daß
ein Kühlelement (66) zur Kühlung des ersten Kältemittel-Temperatursensors (42) und ein zweiter Temperatursensor (62) zur Erfassung der Temperatur des Mediums (50) vorgesehen sind, daß eine elektronische Steuer- oder Regeleinrichtung (64) vorgesehen ist, welche mit dem Kühlelement (66) und dem zweiten Temperatursensor (62) über Signalleitungen verbunden ist und die Kühlleistung des Kühlelements (66) in Abhängigkeit von der Temperatur des Mediums (50) derart einstellt, daß das vom ersten Kältemittel-Temperatursensor (42) erzeugte Expansionssignal einer Kältemittel-Temperatur entspricht, welche niedriger ist als die tatsächliche Kältemitteltemperatur (in 34 bei 42), so daß das Expansionssignal (auf 44) das Expansionsventil (16) auf eine niedrigere Kältemittel-Temperatur einstellt als tatsächlich (bei 34) vorhanden ist.

2. Temperaturregelungsvorrichtung nach Anspruch 1,
**dadurch gekennzeichnet**, daß
die Kühlleistung des Kühlelements (66) von der Steuer- oder Regeleinrichtung (64) mit zunehmend größer werdender Temperatur (bei 62) des Mediums (50) reduziert und, umgekehrt, mit abnehmender Temperatur erhöht wird.

3. Temperaturregelungsvorrichtung nach Anspruch 1 oder 2,
**dadurch gekennzeichnet**, daß
das Kühlelement (66) ein Peltier-Element ist.

4. Temperaturregelungsvorrichtung nach einem der vorhergehenden Ansprüche,
**dadurch gekennzeichnet**, daß
der erste Kältemittel-Temperatursensor (42) über eine mit flüssigem oder gasförmigem Druckmittel gefüllte Kapillarleitung (44) mit einem Betätigungselement (17) des Ventils (16) verbunden ist.

5. Temperaturregelungsvorrichtung nach einem der vorhergehenden Ansprüche,
**dadurch gekennzeichnet**, daß
die Kapillarleitung (44) den Temperatursensor (42) bildet.

6. Anwendung der Temperaturregelungsvorrichtung nach einem der vorhergehenden Ansprüche zur Kühlung einer oder mehrerer Flüssigkeiten in einer Druckmaschine.
